Europäisches Patentamt

European Patent Office

Office européen des brevets

(19)

(11) **EP 1 339 639 B1**

(12) ## EUROPÄISCHE PATENTSCHRIFT

(45) Veröffentlichungstag und Bekanntmachung des Hinweises auf die Patenterteilung:
**22.09.2004 Patentblatt 2004/39**

(21) Anmeldenummer: **01997454.2**

(22) Anmeldetag: **09.11.2001**

(51) Int Cl.⁷: **C01B 33/04**, C01B 33/107

(86) Internationale Anmeldenummer:
**PCT/EP2001/012970**

(87) Internationale Veröffentlichungsnummer:
**WO 2002/042206 (30.05.2002 Gazette 2002/22)**

(54) **VERFAHREN ZUR HERSTELLUNG VON SILANEN**

METHOD OF PRODUCING SILANES

PROCEDE POUR PRODUIRE DES SILANES

(84) Benannte Vertragsstaaten:
**AT BE CH CY DE DK ES FI FR GB GR IE IT LI LU MC NL PT SE TR**

(30) Priorität: **21.11.2000 DE 10057519**

(43) Veröffentlichungstag der Anmeldung:
**03.09.2003 Patentblatt 2003/36**

(73) Patentinhaber: **SOLARWORLD AKTIENGESELLSCHAFT 53113 Bonn (DE)**

(72) Erfinder:
• **KLEIN, Stephan**
  **40822 Mettmann (DE)**
• **BLOCK, Hans-Dieter**
  **51381 Leverkusen (DE)**
• **LEIMKÜHLER, Hans-Joachim**
  **51375 Leverkusen (DE)**

• **DICK, Werner**
  **51371 Leverkusen (DE)**
• **MÜLLER, Dirk**
  **51465 Bergisch Gladbach (DE)**
• **SCHÄFER, Johannes-Peter**
  **51515 Kürten (DE)**

(74) Vertreter: **Rau, Albrecht et al Rau, Schneck & Hübner Königstrasse 2 90402 Nürnberg (DE)**

(56) Entgegenhaltungen:
**EP-A- 0 474 265**      **FR-A- 2 261 977**
**US-A- 4 701 430**

• **DATABASE WPI Section Ch, Week 198640 Derwent Publications Ltd., London, GB; Class E36, AN 1986-260869 XP002192275 & JP 61 187936 A (MITSUI TOATSU CHEM INC), 21. August 1986 (1986-08-21)**

EP 1 339 639 B1

**Beschreibung**

Die vorliegende Erfindung betrifft ein Verfahren zur Herstellung von Silan oder Hydrochlorsilanen durch Disproportionierung von höher chlorierten Hydrochlorsilanen oder Hydrochlorsilangemischen in Gegenwart eines vorbehandelten Katalysators, sowie ein Verfahren zur Behandlung des Katalysators.

$SiH_4$ ist ein hervorragend geeignetes Ausgangsmaterial, aus dem, gegebenenfalls nach weiterer Reinigung, durch thermische Zersetzung sehr reines Silicium in Halbleiterqualität abgeschieden werden kann. Der Bedarf an Reinst-Silicium wächst stark und damit der Bedarf an reinem Silan, dessen hervorragende Eignung zur Reinst-Silicium-Erzeugung immer mehr erkannt und genutzt wird.

Die Herstellung von Silan aus Trichlorsilan durch Disproportionierung ist wirtschaftlich besonders vorteilhaft.

Die Herstellung von Dichlorsilan und Silan aus Hydrochlorsilanen durch Disproportionierung verläuft im Wesentlichen nach den Brutto-Gleichungen

$$SiHCl_3 \rightarrow SiCl_4 + SiH_2Cl_2 \qquad\qquad (1a)$$

$$2\ SiH_2Cl_2 \rightarrow SiCl_4 + SiH_4 \qquad\qquad (1b)$$

$$4\ SiHCl_3 \rightarrow 3\ SiCl_4 + SiH_4 \qquad\qquad (2)$$

Um die Silan-Erzeugung auf diesem Weg auch bei tiefen Temperaturen schnell und ohne Bildung von Zersetzungsprodukten durchführen zu können, ist die Anwesenheit von Katalysatoren hilfreich. Besonders bewährt haben sich basische Katalysatoren, darunter sind Amine und Amin-Derivate, z.B. Salze der Amine, Säureamide, Nitrile, N-haltige Heterocyclen und andere Stickstoff enthaltende Stoffe hervorzuheben.

So ist bekannt, dass Amine, speziell tertiäre Amine und ihre Hydrochloride und quartäre Ammoniumchloride, sowohl in flüssiger (DE 3 500 318 Al) als auch in fester Form, z.B. an feste Träger gebunden (DE 3 311 650 C2), als Katalysatoren die Disproportionierung des Trichlorsilans in wirtschaftlich vorteilhafter Weise beschleunigen. An feste Träger gebundene Amine werden vorzugsweise deshalb eingesetzt, weil damit der Katalysator auf sehr einfache Weise abgetrennt und der Eintrag von verunreinigenden Aminen in die reagierende gasförmig-flüssige Silan-Chlorsilan-Phase vermieden werden kann.

Aus diesen Gründen und der damit verbundenen einfacheren Verfahrensführung werden im technischen Einsatz nur feste, geformte Amine, entweder an Trägern fixiert oder in vernetzte Polymere inkorporiert, als Katalysatoren eingesetzt.

In der Regel wird die Disproportionierung von Trichlorsilan in mehreren Schritten, beispielsweise in zwei Schritten durchgeführt. Es ist jedoch bereits beschrieben worden, die Disproportionierung in einem Schritt nach dem Prinzip der Reaktivdestillation ablaufen zu lassen. Die Reaktivdestillation ist durch Kombination von Reaktion und destillativer Trennung in einem Apparat, insbesondere einer Kolonne gekennzeichnet. Durch die fortlaufende destillative Entfernung der jeweils leichtest siedenden Komponente in jedem Raumelement wird stets ein optimales Gefälle zwischen Gleichgewichtszustand und tatsächlichem Gehalt an leichter siedenden Komponenten bzw. leichtest siedender Komponente aufrecht erhalten, so dass eine maximale Reaktionsgeschwindigkeit resultiert (DE 198 60 146 A1).

Die Vorteile der Reaktivrektifikation lassen sich insbesondere durch die Verknüpfung mit der Katalyse an Feststoffen nutzen. Dies wird dadurch erreicht, dass die Disproportionierung von Trichlorsilan zu Siliciumtetrachlorid und Silan in einer Kolonne ausgeführt wird, deren den Stoffaustausch ermöglichenden Füllungen (Füllkörper, Einbauten, etc.) mit den katalytisch wirksamen Feststoffen verbunden sind.

Durch die Fixierung des festen Katalysators im Reaktionsapparat ist es unumgänglich, diesen in hochreiner Form und insbesondere wasserfrei einzusetzen. Die hohe Reinheit ist Voraussetzung für die Vermeidung der Produktverunreinigung durch den Katalysator, die Wasserfreiheit vermindert das Problem der Hydrolyse der Chlorsilane am Katalysator und die mit den Hydrolyseprodukten HCl (Korrosion, Neutralisation aminischer Katalysatorfunktionen) und Kieselsäure bzw. kieselsäure-ähnliche Substanzen (Ablagerungen am Katalysator) verknüpften Probleme.

Hydrochlorsilane werden von Wasser unter Bildung von oligomeren Siloxanen zersetzt, Trichlorsilan beispielsweise gemäß:

$$HSiCl_3 + 1.5\ H_2O \rightarrow 1/n\ (HSiO_{1.5})n + 3\ HCl \qquad\qquad (3)$$

Bei einer Katalysatortrockenmasse von z.B. 4000 kg entspricht das je nach Feuchtegehalt des Katalysators den in der folgenden Tabelle dargestellten Mengen von Wasser und Hydrolyseprodukten:

| Feuchte [%] | m ($H_2O$)[kg] | m ($HSiO_{1,5}$) [kg] | m (HCl) [kg] | Normliter HCL |
|---|---|---|---|---|
| 0,05 | 2 | 4 | 8 | 179 |
| 0,1 | 4 | 8 | 16 | 359 |
| 0,3 | 12 | 24 | 48 | 1067 |
| 1 | 40 | 79 | 160 | 3586 |
| 2 | 80 | 157 | 320 | 7172 |
| 2,5 | 100 | 196 | 400 | 8966 |

Die Hydrolyse der Hydrochlorsilane durch Wasserreste am Katalysator ist also unbedingt zu minimieren.

Der Reinigung und Vorbehandlung des Katalysators für die Disproportionierung der Hydrochlorsilane ist bisher nur wenig Beachtung geschenkt worden, so dass das Potential der katalytischen Aktivität nicht voll genutzt werden konnte.

In EP 206 621 A1 wird zwar die Trocknung des Katalysators durch absatzweise Verdrängung des Wassers mit Ethanol und Toluol beschrieben, wobei der Katalysator in den getrockneten Lösungsmitteln suspendiert und anschließend durch Dekantieren vom Lösungsmittel abgetrennt wird. Die Restwassergehalte werden mit <0,5% angegeben. Der Entfernung von Verunreinigungen wird jedoch ebenso wenig Rechnung getragen, wie der Frage der Einbindung dieser Prozedur in den technischen Katalyseprozess und der Überführung des Katalysators in den Reaktor.

In der JPL-Studie "Development of a polysilicon process based on chemical vapor deposition, Final report (1979 - 1982); Hemlock Semiconductor Corporation" (DOE/JPL 955533-83, S. 26) werden als Vorbehandlungsvarianten zur Trocknung eines Katalysators für die Disproportionierung die Einzelmethoden Verdrängung mit Lösungsmitteln, Vakuumtrocknung, Trocknung im Ofen, Trocknung im Exsikkator und Inertgasspülung erwähnt, jedoch nicht weiter beschrieben. Außer der Exsikkatortrocknung seien alle Methoden zur Vorbehandlung geeignet, wobei jedoch weder der Entfernung der wasserlöslichen Verunreinigungen und dem effektiven Restwassergehalt, noch der Abstimmung der Konditionierung auf die Applikation des Katalysators im Reaktor Beachtung geschenkt wird.

In *Ind. Eng. Chem. Res.* **1988**, *27*, 1600-1606 wird die thermische Trocknung des Katalysators für die Disproportionierung bei 80°C im Vakuum als effiziente Trocknungsmethode beschrieben, jedoch ohne die Restwassergehalte zu quantifizieren oder auf die Problematik der Verunreinigungen einzugehen.

All diesen Prozeduren ist gemeinsam, dass am Ende der vorbehandelte Katalysator an den Reaktionsort, d. h. in den Reaktor, in dem die Disproportionierung durchgeführt werden soll, verbracht werden muss. Dabei nimmt jedoch der Katalysator wieder Feuchtigkeit und Luftinhaltsstoffe auf und wird somit wieder verunreinigt. Darüber hinaus hat es sich als sehr schwierig, ja fast unmöglich erwiesen, einen trockenen Katalysator in der handelsüblichen Kugelform in die Behältnisse (Taschen, Zwickel, Röhren der oben genannten Füllungen, Füllkorper, Einbauten etc.) zu überführen, in die er eingefüllt werden soll, damit er im Reaktor (vorzugsweise in einer Reaktivrektifikationskolonne) fixiert werden kann. Grund dafür ist, dass die trockenen kugelförmigen Katalysatorpartikel sich beim Schütten oder Gießen elektrostatisch aufladen und aufgrund ihrer Leichtigkeit auseinander fliegen und sich nicht in die vorgesehenen Räume einfüllen lassen.

Es bestand also die Aufgabe, ein Verfahren anzugeben, welches es ermöglicht, feste Katalysatoren zur Disproportionierung von Hydrochlorsilanen vor ihrem ersten Kontakt mit Hydrochlorsilanen derart vorzubehandeln, dass der Wassergehalt und der Gehalt an insbesondere gegenüber Hydrochlorsilanen reaktionsfähigen organischen Verbindungen und der Gehalt an in Hydrochlorsilanen löslichen Verbindungen minimiert wird, die molekulare und makroskopische Struktur und Festigkeit des Katalysators erhalten bleibt.

Gegenstand der Erfindung ist ein Verfahren zur Herstellung von Verbindungen der Formel

$$(H)_x Si(Cl)_y \tag{I},$$

wobei

x für 2, 3 oder 4 und
y für 0, 1 oder 2 steht und
x+y=4ist,

durch Disproportionierung eines Hydrochlorsilans der Formel

$$(H)_a Si(Cl)_b \qquad\qquad (II),$$

wobei

a für 1, 2 oder 3 und
b für 1, 2 oder 3 steht und
a + b = 4 und
b > y ist,

oder einer Mischung dieser Hydrochlorsilane in Gegenwart eines Katalysators, dadurch gekennzeichnet, dass der Katalysator vor dessen Einsatz

a) mit hochreinem Wasser in einem oder mehreren Schritten gewaschen,

b) in wasserfeuchtem Zustand in den Reaktor, in dem die Disproportionierung erfolgen soll, überführt und

c) im Reaktor mit siedendem Methanol behandelt oder mit wasserfreiem Methanol gespült wird und

d) der Methanol aus dem Katalysator durch Evakuieren und/oder durch Strippen mit Inertgas entfernt wird.

Erfindungsgemäß werden also Hydrochlorsilane mit einer geringeren Anzahl an Chlorsubstituenten oder Silan ausgehend von höher chlorierten Hydrochlorsilanen erhalten, wobei bedingt durch die Natur der Disproportionierungsreaktion auch immer ein höherchloriertes Koppelprodukt anfällt, das jedoch als Edukt definiert werden kann und in diesem Sinne zu den gewünschten Produkten abreagiert.

Das erfindungsgemäße Verfahren kann diskontinuierlich oder kontinuierlich durchgeführt werden. Bevorzugt ist eine kontinuierliche Reaktionsführung.

Das erfindungsgemäße Verfahren eignet sich besonders vorteilhaft zur Herstellung von Silan durch Disproportionierung von Trichlorsilan, Dichlorsilan oder deren Gemisch, bevorzugt von Trichlorsilan.

Es ist beispielsweise aber auch möglich Dichlorsilan durch Disproportionierung von Trichlorsilan zu erhalten.

Trichlorsilan und Dichlorsilan können dabei entweder als reine Stoffe oder als Gemische untereinander oder auch als Gemische mit Siliciumtetrachlorid und/oder Monochlorsilan eingesetzt werden.

Bevorzugt wird das erfindungsgemäße Disproportionierungs-Verfahren nach dem Prinzip der Reaktivdestillation durchgeführt.

Geeignete katalytisch wirksame Feststoffe sind bekannt und beispielsweise in der DE-OS-2 507 864 beschrieben. Es sind beispielsweise solche Feststoffe geeignet, die an einem Gerüst aus Polystyrol, vernetzt mit Divinylbenzol, Amino- oder Alkylenamino-Gruppen tragen. Als Amino- oder Alkylenamino-Gruppen seien beispielsweise genannt: Dimethylamino-, Diethylamino-, Ethylmethylamino-, Di-n-propylamino-, Di-iso-propylamino-, Di-2-chlorethylamino-, Di-2-chlorpropylamino-Gruppen bzw. die entsprechend substituierten Alkylenamino-Gruppen und die jeweiligen Hydrochloride oder aber die durch Methylierung, Ethylierung, Propylierung, Butylierung, Hydroxyethylierung oder Benzylierung daraus gebildeten Trialkylammonium-Gruppen mit Chlorid als Gegenion. Selbstverständlich können im Fall quartärer Ammoniumsalze oder protonierter Ammoniumsalze auch katalytisch wirksame Feststoffe mit anderen Anionen, z.B. Hydroxid, Sulfat, Hydrogensulfat, Bicarbonat u.a. in das erfindungsgemäße Verfahren eingeführt werden, eine Umwandlung in die Chloridform ist unter den Reaktionsbedingungen mit der Zeit aber unvermeidbar, was auch für organische Hydroxygruppen gilt. Bevorzugt sind demnach solche Ammoniumsalze, die Chlorid als Gegenion enthalten.

Als katalytisch wirksame Feststoffe sind beispielsweise auch Feststoffe geeignet, die aus einem Polyacrylsäure-Gerüst, speziell einem Polyacrylamid-Gerüst bestehen, das z.B. über eine Alkylgruppe Trialkylbenzylammonium gebunden hat.

Eine andere für das erfindungsgemäße Verfahren geeignete Gruppe katalytisch wirksamer Feststoffe sind beispielsweise solche, die an einem Polystyrol-Gerüst, vernetzt mit Divinylbenzol, Sulfonat-Gruppen angebunden haben, denen als Kationen tertiäre oder quartäre Ammoniumgruppen gegenüberstehen.

Im Regelfall sind makroporöse oder mesoporöse Austauscherharze besser als Gelharze geeignet. Weitere geeignete katalytisch wirksame Feststoffe sind beispielsweise solche, die auf einem festen anorganischen Gerüst wie Kieselsäure oder Zeolith angebundene organische Aminogruppen der obengenannten Art, z.B. solche mit einer 3-Dimethylaminopropylsiloxy-Gruppe, tragen (US-A-4 701 430). Die geeigneten, katalytisch wirksamen Feststoffe werden üblicherweise als pulver- oder kugelförmige Kontakte eingesetzt.

Bevorzugt werden Divinylbenzol-vernetzte Polystyrol-Harze mit tert.-Amin-Gruppierungen in der Seitenkette ausgewählt, entweder als gelförmige oder besser als makroporöse Harze, weil dieser Katalysator-Typ die Forderung nach thermischer und chemischer Beständigkeit und hoher Aktivität in ausgezeichneter Weise erfüllt.

Eine Reihe geeigneter katalytisch aktiver Feststoffe sind kommerziell erhältlich.

Erfindungsgemäß wird der Katalysator zunächst einer Wäsche mit hochreinem Wasser unterzogen (Schritt a)).

Bevorzugt wird diese Wäsche bei Temperaturen von 60 bis 90°C durchgeführt,

Durch die Wäsche des Katalysators mit hochreinem Wasser werden wasserlösliche Verunreinigungen entfernt. Diese Wäsche kann in einem oder mehreren Schritten stattfinden, wobei die Kontaktzeit von Wasser und Katalysator in Summe zwischen 0,5 und 50 Stunden, vorzugsweise zwischen 1 und 24 Stunden beträgt.

Das Volumenverhältnis von Wasser zu Katalysator beträgt bei jedem Waschschritt vorzugsweise 1:1 bis 10:1.

Die Wäsche kann beispielsweise so durchgeführt werden, dass der Katalysator im Waschwasser suspendiert wird, oder aber von dem Waschwasser durch freie oder erzwungene Strömung durchflossen wird.

Wird der Katalysator im Waschwasser suspendiert, kann zum Abschluss der Wäsche eine mechanische Abtrennung des anhaftenden Wassers erfolgen, beispielsweise durch Dekantieren, Filtrieren oder Zentrifugieren.

Erfolgt die Wäsche in mehreren Schritten, so kann im ersten Waschschritt dem Waschwasser auch eine anorganische Lauge, beispielsweise Natronlauge, Kalilauge oder Ammoniumhydroxydlösung hinzugefügt werden. Beispielsweise kann die Konzentration der Alkalilauge im Wasser 0,1 bis 20 Gew.-% betragen.

Nach der Wäsche erfolgt erfindungsgemäß die Überführung des wasserfeucht vorliegenden Katalysators in den Reaktor, in dem die Disproportionierungsreaktion durchgeführt werden soll (Schritt b)).

Der Katalysator lässt sich in dieser Form gut handhaben und weist gegenüber Lufteinfluss nur geringe Empfindlichkeit auf.

Der Schritt b) kann beispielsweise aus mehreren Teilschritten bestehen, wobei der wasserfeuchte Katalysator zunächst in Behältnisse von ca. 1 - 50 ml Volumen, beispielsweise Taschen, Zwickel oder Röhren in den für einen guten Gas-Flüssigkeits-Stoffaustausch geeigneten Füllungen, Füllkörpern oder Einbauten aus vorzugsweise metallischen Werkstoffen eingefüllt wird. Im Regelfall werden diese Behältnisse für den Disproportionierungs-Katalysator im nächsten Teilschritt verschlossen, z.B. durch Schweißen, Löten, mechanisches Pressen, und danach zu Elementen zusammengestellt, die in den Reaktor, d.h. vorzugsweise die Reaktivrektifikationskolonne, eingesetzt werden. Es ist auch möglich, die Füllungen oder Einbauten, enthaltend den Katalysator, in der Kolonne zu Elementen oder Paketen zusammenzubauen.

Im anschließenden Schritt c) wird der im Reaktor befindliche Katalysator mit wasserfreiem Methanol gespült und/oder mit siedendem Methanol behandelt.

Das Volumenverhältnis von Methanol zu Katalysator bei der Behandlung des Katalysators im Reaktor mit Methanol beträgt vorzugsweise 0,1 : 1 bis 1 : 0,3.

Vorzugsweise wird die Behandlung mit Methanol mindestens zweimal mit frisch zugeführtem Methanol durchgeführt, insbesondere bevorzugt 2 bis 5 mal.

Vorzugsweise erfolgt diese Behandlung des Katalysators im Reaktor mit siedendem Methanol durch Erhitzen des Methanols zum Sieden am unteren Ende des Reaktors und Kondensation des Methanols am oberen Ende des Reaktors. Nach der Behandlung wird der Methanol aus dem unteren Teil des Reaktors entnommen. Mit dem Methanol werden lösliche Verunreinigungen entfernt.

Wird mit siedendem Methanol behandelt, wird bei dieser Behandlung im Reaktor vorzugsweise ein Druck von 1-3 bar eingestellt. Durch den so eingestellten Druck wird die Temperatur des siedenden Methanols auf ca. 64° bis ca. 90°C eingestellt. Zwischen den einzelnen Durchgängen der Methanol-Behandlung wird der Reaktor vorteilhaft mit Inertgas oder mit Wasserstoff beaufschlagt, welches dann beim nächsten Behandlungsschritt wieder aus dem Reaktor verdrängt wird.

Jeder der Behandlungsschritte mit siedendem Methanol dauert beispielsweise 0,5 bis 50 Stunden, bevorzugt 1 - 24 Stunden.

Es ist vorteilhaft, bei jedem Durchgang eine kleine Teilmenge, z.B. 1 - 10 % des eingesetzten Methanols am oberen Ende des Reaktors zusammen mit der aus dem Reaktor verdrängten Luft oder dem verdrängten Inertgas oder aus dem Katalysator ausgetriebenen Leichtsiedern zu entnehmen.

Weniger bevorzugt, aber durchaus möglich ist es, Schritt c) zu kombinieren mit einem Auswaschen des Katalysators mit Ethanol, Propanol und/oder Isopropanol.

Nach der Behandlung des Katalysators mit Methanol folgt erfindungsgemäß die Entfernung des Methanols aus dem Katalysator durch Evakuieren und/oder durch Strippen mit Inertgas (Schritt d)).

Es ist vorteilhaft, vor dem Evakuieren und/oder Strippen mit Inertgas den Methanol gründlich abtropfen zu lassen, so dass nur noch der restliche Methanol, der im Katalysator und in den Füllungen und Einbauten und im Reaktor verblieben ist entfernt werden muss.

Die Entfernung des Methanols wird bevorzugt bei Temperaturen von 60 bis 90°C durchgeführt.

Inertgase im hier anzuwendenden Sinn sind beispielsweise Stickstoff, Edelgase und Wasserstoff. Bevorzugt ist dabei die Verwendung von Wasserstoff zum Strippen und auch für den Druckausgleich nach Evakuierungsstufen. Das Inertgas wird vorteilhafterweise vor dem Eintritt in den Reaktor auf die gewünschte Temperatur von 60-90°C erwärmt. Die Durchströmung des Reaktors mit Inertgas kann beispielsweise von oben nach unten und von unten nach oben erfolgen.

Das Evakuieren wird sinnvollerweise im Druckwechselbetrieb vorgenommen, idealerweise sofort nach dem letzten Methanol-Behandlungsschritt bei noch erwärmtem Reaktor. Da sich der Reaktor samt dem eingebrachten Katalysator beim Druckwechselbetrieb abkühlt, ist es vorteilhaft, bei mehreren Evakuierungsstufen zwischendurch den Reaktor durch Zufuhr von erwärmtem Inertgas wieder auf ca. 64 bis 90°C aufzuheizen.

Es ist möglich, aber nicht erforderlich, nach der Behandlung mit Methanol (Schritt c)) oder nach Entfemen des Methanols aus dem Katalysator (Schritt d)) den Katalysator einer chemischen Trocknung zu unterziehen. Dies kann beispielsweise durch Beschicken des nach dem erfindungsgemäßen Verfahren vorbehandelten Katalysators im Reaktor mit Thionylchlorid oder Phosgen geschehen. Die Reaktion restlichen Wassers verläuft mit diesen Chemikalien ohne Bildung fester sauerstoffhaltiger Produkte, vielmehr werden flüchtige Oxide $CO_2$ und $SO_2$ gebildet, so dass die Gefahr der Poren-Verstopfung beim nachfolgenden Kontakt mit Chlorsilanen minimiert wird.

Im Fall des Einsatzes dieser wasservernichtenden Chemikalien ist allerdings eine nachfolgende erneute Entfernung der gebildeten gasförmigen Reaktionsprodukte $CO_2$ bzw. $SO_2$ und der nicht umgesetzten Reaktanten durch Evakuieren oder Strippen mit Inertgas erforderlich.

Gegenstand der Erfindung ist weiterhin ein Verfahren zur Behandlung eines Katalysators zur Disproportionierung von Hydrochlorsilanen, dadurch gekennzeichnet, dass der Katalysator

a) mit hochreinem Wasser in einem oder mehreren Schritten gewaschen,

b) in wasserfeuchtem Zustand in den Reaktor, in dem die Disproportionierung erfolgen soll, überführt und

c) im Reaktor mit siedendem Methanol behandelt oder mit Methanol gespült wird und

d) der Methanol aus dem Katalysator durch Evakuieren und/oder durch Strippen mit Inertgas entfernt wird.

Die vorteilhaften und bevorzugten Ausführungsformen dieses Verfahrens entsprechen dem bereits oben Ausgeführten.

Das erfindungsgemäße Verfahren kann beispielsweise eingesetzt werden in Prozessen zur Herstellung von Dichlorsilan und Silan und als Teilschritt von Prozessen zur Herstellung von Reinst-Silicium aus Silan.

Bevorzugt wird das erfindungsgemäße Verfahren in ein Gesamtverfahren zur Herstellung von Silan und/oder Reinst-Silicium integriert.

Besonders bevorzugt wird das erfindungsgemäße Verfahren in ein Verfahren zur Herstellung von Silan und/oder Reinst-Silicium integriert, das aus folgenden Schritten besteht:

1. Trichlorsilan-Synthese aus Silicium, Siliciumtetrachlorid, Wasserstoff und ggf. einer weiteren Chlorquelle in einem Wirbelschicht-Reaktor unter Druck mit anschließender destillativer Isolierung des erzeugten Trichlorsilans und Rückführung des nicht umgesetzten Siliciumtetrachlorids und gewünschtenfalls des nicht umgesetzten Wasserstoffs.

2. Disproportionierung des Trichlorsilans zu Silan und Siliciumtetrachlorid über die Zwischenstufen Dichlorsilan und Monochlorsilan nach dem erfindungsgemäßen Verfahren an basischen Katalysatoren, vorzugsweise Amingruppen enthaltenden Katalysatoren, in apparativ zweistufiger oder einstufiger Ausführung und Rückführung des erzeugten, als Schwersieder anfallenden Siliciumtetrachlorids in die erste Verfahrensstufe.

3. Verwendung des Silans in der im vorangehenden Schritt anfallenden Reinheit oder Reinigung des Silans auf die vom weiteren Verwendungszweck geforderte Reinheit, vorzugsweise durch Destillation, besonders bevorzugt durch Destillation unter Druck.
und gegebenenfalls

4. thermische Zersetzung des Silans zu Reinst-Silicium, üblicherweise oberhalb 500°C.

Neben der thermischen Zersetzung an elektrisch beheizten Reinst-Silicium-Stäben ist dazu die thermische Zersetzung in einem Wirbelbett aus Reinst-Silicium-Partikeln geeignet, besonders wenn die Herstellung von solar grade Reinst-Silicium angestrebt ist. Zu diesem Zweck kann das Silan mit Wasserstoff und/oder mit Inertgasen im Mol-Verhältnis 1:0 bis 1:10 gemischt werden.

Die Erfindung wird durch die folgenden Beispiele weiter erläutert, wobei die Beispiele die Erfindung nur illustrieren und nicht einschränkend zu verstehen sind.

**Beispiele:**

**Beispiel 1:** Vergleichsversuch thermische Trocknung (statisch).

Ein Ionentauscher LEWATTT® MP 62 (BAYER AG) wurde fünf mal in heißem destilliertem Wasser von ca. 90°C (Volumenverhältnis Katalysator : Wasser ca. 1:1) für jeweils 0,5 h suspendiert und das Wasser jeweils durch Dekantieren verworfen. Der Katalysator wurde anschließend im Trockenschrank bei 60°C in einer Glasschale getrocknet. Nach 12 h betrugt der Restwassergehalt 3 Gew.-% gemäß Karl-Fischer-Titration.

**Beispiel 2:** Vergleichsversuch thermische Trocknung im Inertgasstrom.

Ein Ionentauscher LEWATTT® MP 62 (BAYER AG) wurde fünf mal in heißem destilliertem Wasser von ca. 90°C (Volumenverhältnis Katalysator : Wasser ca. 1:1) für jeweils 0,5 h suspendiert und das Wasser jeweils durch Dekantieren verworfen. Der Katalysator wurde anschließend in einem Reaktionsrohr bei 70°C im Stickstoffstrom behandelt. Nach 12 h betrug der Restwassergehalt 0,15 Gew.-% gemäß Karl-Fischer-Titration.

**Beispiel 3:** Vergleichsversuch thermische Trocknung im Vakuum.

Ein Ionentauscher LEWATTT® MP 62 (BAYER AG) wurde fünf mal in heißem destilliertem Wasser von ca. 90°C (Volumenverhältnis Katalysator : Wasser ca. 1:1) für jeweils 0,5 h suspendiert und das Wasser jeweils durch Dekantieren verworfen. Der Katalysator wurde anschließend im Reaktionsrohr bei 70°C im Vakuum bei 30 hPa behandelt. Nach 12 h betrug der Restwassergehalt 0,2 Gew.-% gemäß Karl-Fischer-Titration.

**Beispiel 4:**

Ein Ionentauscher LEWATTT® MP 62 (BAYER AG) wurde fünf mal in heißem destilliertem Wasser von ca. 90°C (Volumenverhältnis Katalysator : Wasser ca. 1:1) für jeweils 0,5 h suspendiert und das Wasser jeweils durch Dekantieren verworfen. Dieser Katalysator wurde in ein Reaktionsrohr mit Frittenboden und Zu- und Ablaufventil überführt und in diesem so mit wasserfreiem Methanol versetzt, dass er ganz von diesem bedeckt war. Durch Öffnen des Ablaufventils wurde nach 5 Minuten das Lösungsmittel abgelassen, das Ventil geschlossen und der Vorgang wiederholt. Insgesamt wurde fünf mal mit frischem Lösungsmittel aufgefüllt. Der Katalysator wurde anschließend im Reaktionsrohr bei 70°C im Vakuum bei 30 hPa behandelt. Nach 12 h betrug der Restwassergehalt 0,18 Gew.-% gemäß Karl-Fischer-Titration.

**Beispiel 5:**

Ein Ionentauscher LEWATTT® MP 62 (BAYER AG) wurde fünf mal mit heißem destilliertem Wasser von ca. 90°C (Volumenverhältnis Katalysator : Wasser ca. 1:1) für jeweils 0,5 h suspendiert und das Wasser jeweils durch Dekantieren verworfen. Dieser Katalysator wurde in ein Reaktionsrohr mit Frittenboden und Zu- und Ablaufventil überführt und in diesem so mit wasserfreiem Methanol versetzt, dass er ganz von diesem bedeckt war. Durch Öffnen des Ablaufventils wurde nach 5 Minuten das Lösungsmittel abgelassen, das Ventil geschlossen und der Vorgang wiederholt. Insgesamt wurde fünf mal mit frischem Lösungsmittel aufgefüllt. Nach der letzten Behandlung mit Methanol wurde der Katalysator für 0,5 h mit einer Lösung von 3 Gew.-% Thionylchlorid in n-Heptan versetzt. Der Katalysator wurde anschließend im Reaktionsrohr bei 70°C im Vakuum bei 30 hPa behandelt. Nach 12 h betrug der Restwassergehalt 0,06 Gew.-% gemäß Karl-Fischer-Titration.

**Beispiel 6:**

Ein Ionentauscher LEWATTT® MP 62 (BAYER AG) wurde fünf mal mit heißem destilliertem Wasser von ca. 90°C (Volumenverhältnis Katalysator : Wasser ca. 1:1) für jeweils 0,5 h suspendiert und das Wasser jeweils durch Dekantieren verworfen. Dieser Katalysator wurde in ein Reaktionsrohr mit Frittenboden und Zu- und Ablaufventil überführt und in diesem so mit wasserfreiem Methanol versetzt, dass er ganz von diesem bedeckt war. Durch Öffnen des Ablaufventils wurde nach 5 Minuten das Lösungsmittel abgelassen, das Ventil geschlossen und der Vorgang wiederholt. Insgesamt wurde fünf mal mit frischem Lösungsmittel aufgefüllt. Dieselbe Prozedur wurde anschließend durch fünfmaliges Behandeln mit wasserfreiem n-Heptan wiederholt. Der Katalysator wurde anschließend im Reaktionsrohr bei 70°C im Vakuum bei 30 hPa behandelt. Nach 12 h betrug der Restwassergehalt 0,20 Gew.-% gemäß Karl-Fischer-Titration. Das Beispiel zeigt, dass die Erniedrigung des Restwassergehaltes in Beispiel 5 auf die zusätzliche chemische Trocknung mittels Thionylchlorid und nicht auf das zugesetzte n-Heptan zurückzuführen ist.

**Beispiel 7:**

Die Katalysatoren aus den Beispielen 2 (Vergleich) und 4 (erfindungsgemäß) wurden hinsichtlich enthaltener thermodesorbierbarer Verbindungen verglichen. Dazu wurden Katalysatoren, die gemäß Beispiel 2 bzw. 4 vorbehandelt worden waren, 1 h lang bei 90°C getempert und die desorbierten Verbindungen bei tiefer Temperatur ausgefroren. Die ausgefrorenen Proben wurden quantitativ (Auswaage, ppm bezogen auf Katalysatoreinsatzmenge) und qualitativ (GC-MS) ausgewertet. Der erfindungsgemäß vorbehandelte Katalysator aus Beispiel 4 wies hinsichtlich der Substanzklassen Amine, Gylkol, Kohlenwasserstoffe (KW) und anderen Spurenbestandteilen geringere Anteile als der Katalysator aus Beispiel 2 im Abgas auf (vgl. folgende Tabelle).

|  | **Kat aus Beispiel 2** | **Kat aus Beispiel 4** |
|---|---|---|
| Methanol [ppm] | 0 | 4 |
| Amine [ppm] | 4 | 1 |
| Glykol [ppm] | 12 | 0 |
| KW (C10-C16) [ppm] | 163 | 127 |
| andere [ppm] | 4 | 0 |
| **Summe [ppm]** | **183** | **132** |

**Patentansprüche**

1. Verfahren zur Herstellung von Verbindungen der Formel

$$(H)_x Si(Cl)_y \qquad (I),$$

wobei

x für 2, 3 oder 4 und
y für 0, 1 oder 2 steht und
x + y = 4 ist,

durch Disproportionierung eines Hydrochlorsilans der Formel

$$(H)_a Si(Cl)_b \qquad (II),$$

wobei

a für 1, 2 oder 3 und
b für 1, 2 oder 3 steht und
a + b = 4 und
b > y ist,

oder einer Mischung dieser Hydrochlorsilane in Gegenwart eines Katalysators, **dadurch gekennzeichnet, dass** der Katalysator vor dessen Einsatz

a) mit hochreinem Wasser in einem oder mehreren Schritten gewaschen,

b) in wasserfeuchtem Zustand in den Reaktor, in dem die Disproportionierung erfolgen soll, überführt und

c) im Reaktor mit siedendem Methanol behandelt oder mit Methanol gespült wird und

d) der Methanol aus dem Katalysator durch Evakuieren und/oder durch Strippen mit Inertgas entfernt wird.

**2.** Verfahren gemäß Anspruch 1, **dadurch gekennzeichnet, dass** es sich bei der Verbindung der Formel I um Silan und bei dem Hydrochlorsilan der Formel II um Trichlorsilan, Dichlorsilan oder deren Gemisch handelt.

**3.** Verfahren gemäß Anspruch 1, **dadurch gekennzeichnet, dass** es sich bei der Verbindung der Formel I um Dichlorsilan und bei dem Hydrochlorsilan der Formel II um Trichlorsilan, handelt.

**4.** Verfahren gemäß wenigstens einem der Ansprüche 1 bis 3, **dadurch gekennzeichnet, dass** die Disproportionierung nach dem Prinzip der Reaktivdestillation durchgeführt wird.

**5.** Verfahren gemäß wenigstens einem der Ansprüche 1 bis 4, **dadurch gekennzeichnet, dass** die Wäsche des Katalysators mit hochreinem Wasser (Schritt a)) bei Temperaturen von 60 bis 90°C durchgeführt wird.

**6.** Verfahren gemäß wenigstens einem der Ansprüche 1 bis 5, **dadurch gekennzeichnet, dass** die Behandlung des Katalysators im Reaktor mit Methanol (Schritt c)) durch Erhitzen des Methanols zum Sieden am unteren Ende des Reaktors und Kondensation des Methanols am oberen Ende des Reaktors erfolgt.

**7.** Verfahren gemäß wenigstens einem der Ansprüche 1 bis 5, **dadurch gekennzeichnet, dass** die Behandlung des Katalysators mit Methanol (Schritt c)) durch Spülen mit wasserfreiem Methanol erfolgt.

**8.** Verfahren gemäß wenigstens einem der Ansprüche 1 bis 7, **dadurch gekennzeichnet, dass** die Behandlung des Katalysators im Reaktor mit Methanol (Schritt c)) mindestens zweimal mit frisch zugeführtem Methanol durchgeführt wird.

**9.** Verfahren gemäß wenigstens einem der Ansprüche 1 bis 8, **dadurch gekennzeichnet, dass** das Volumenverhältnis von Methanol zu Katalysator bei der Behandlung des Katalysators im Reaktor mit Methanol (Schritt c)) 0,1 : 1 bis 1 : 0,3 beträgt

**10.** Verfahren gemäß wenigstens einem der Ansprüche 1 bis 9, **dadurch gekennzeichnet, dass** nach Entfernen des Methanols aus dem Katalysator (Schritt d)) der Katalysator einer chemischen Nach-Trocknung unterzogen wird.

**11.** Verfahren zur Behandlung eines Katalysators zur Disproportionierung von Hydrochlorsilanen, **dadurch gekennzeichnet, dass** der Katalysator

a) mit hochreinem Wasser in einem oder mehreren Schritten gewaschen,

b) in wasserfeuchtem Zustand in den Reaktor, in dem die Disproportionierung erfolgen soll, überführt und

c) im Reaktor mit siedendem Methanol behandelt oder mit wasserfreiem Methanol gespült wird und

d) der Methanol aus dem Katalysator durch Evakuieren und/oder durch Strippen mit Inertgas entfernt wird.

## Claims

**1.** A method for the manufacture of compounds according to the formula

$$(H)_x Si(Cl)_y \qquad (I),$$

wherein

x is 2, 3 or 4, and
y is 0, 1 or 2, and
x + y = 4,

by disproportionation of a hydrochlorosilane of the formula

$$(H)_a Si(Cl)_b \qquad (II),$$

wherein

a is 1, 2 or 3, and
b is 1, 2 or 3, and
a + b = 4 and
b > y,

or a mixture of such hydrochlorosilanes in the presence of a catalyst, **characterized in that** the catalyst prior to use

a) is washed with hyper-pure water in one or several steps,

b) is transferred in a water-moist state into the reactor where the disproportionation shall be carried out, and

c) is either treated with boiling methanol or rinsed with methanol in the reactor, and

d) the methanol is removed from the catalyst by evacuation and/or by stripping with inert gas.

2. A method according to Claim 1, **characterized in that** the compound in formula I is silane and the hydrochlorosilane in formula II is trichlorosilane, dichlorosilane or a mixture thereof.

3. A method according to Claim 1, **characterized in that** the compound in formula I is dichlorosilane and the hydrochlorosilane in formula II is trichlorosilane.

4. A method according to at least one of Claims 1 to 3, **characterized in that** the disproportionation is carried out according to the principle of reactive distillation.

5. A method according to at least one of Claims 1 to 4, **characterized in that** the washing of the catalyst is carried out with hyper-pure water (step a)) at temperatures from 60 to 90°C.

6. A method according to at least one of Claims 1 to 5, **characterized in that** the treatment of the catalyst in the reactor is carried out with methanol (step c)) by heating the methanol at the lower-most end of the reactor until it boils, and allowing it to condense at the upper end of the reactor.

7. A method according to at least one of Claims 1 to 5, **characterized in that** the treatment of the catalyst with methanol (step c)) is carried out by rinsing with anhydrous methanol.

8. A method according to at least one of Claims 1 to 7, **characterized in that** the treatment of the catalyst with methanol in the reactor (step c)) is carried out at least two times with freshly introduced methanol.

9. A method according to at least one of Claims 1 to 8, **characterized in that** the ratio of volumes of methanol to catalyst during the treatment of the catalyst in the reactor with methanol (step c)) is 0.1 : 1 to 1 : 0.3.

10. A method according to at least one of Claims 1 to 9, **characterized in that** after the removal of the methanol from the catalyst (step d)), the catalyst is subjected to a chemical post-drying procedure.

11. A method for the treatment of a catalyst for disproportionation of hydrochlorosilanes, **characterized in that** the catalyst

a) is washed with hyper-pure water in one or several steps,

b) is transferred in a water-moist state into the reactor where the disproportionation shall be carried out, and

c) is either treated with boiling methanol or rinsed with anhydrous methanol in the reactor, and

d) the methanol is removed from the catalyst by evacuation and/or by stripping with inert gas.

**Revendications**

1.  Procédé de préparation de composés de la formule

$$(H)_x Si(Cl)_y \qquad (I)$$

où

x représente 2, 3 ou 4,
y représente 0, 1 ou 2, et
x + y = 4,

par disproportionation d'un hydrochlorosilane de la formule

$$(H)_a Si(Cl)_b \qquad (II)$$

où

a représente 1, 2 ou 3,
b représente 1, 2 ou 3, et
a + b = 4, et
b > y

ou d'un mélange de ces hydrochlorosilanes en présence d'un catalyseur, **caractérisé en ce que** le catalyseur est, avant sa mise en oeuvre

a) lavé avec de l'eau très pure en une ou plusieurs étapes,
b) transféré à l'état humide dans le réacteur dans lequel la disproportionation doit se produire,
c) traité dans le réacteur avec du méthanol bouillant ou rincé avec du méthanol, et
d) le méthanol est éliminé du réacteur par évacuation et/ou par stripage avec un gaz inerte.

2.  Procédé selon la revendication 1, **caractérisé en ce que** le composé de la formule I consiste en un silane et **en ce que** l'hydrochlorosilane de la formule II consiste en un trichlorosilane, un dichlorosilane ou en leurs mélanges.

3.  Procédé selon la revendication 1, **caractérisé en ce que** le composé de la formule I consiste en un dichlorosilane et **en ce que** l'hydrochlorosilane de la formule II consiste en un trichlorosilane.

4.  Procédé selon au moins l'une des revendications 1 à 3, **caractérisé en ce que** la disproportionation est réalisée selon le principe de la distillation réactive.

5.  Procédé selon au moins l'une des revendications 1 à 4, **caractérisé en ce que** le lavage du catalyseur est réalisé avec de l'eau très pure (étape a)) à des températures allant de 60 à 90°C.

6.  Procédé selon au moins l'une des revendications 1 à 5, **caractérisé en ce que** le traitement du catalyseur dans le réacteur avec le méthanol (étape c)) est réalisée par chauffage du méthanol jusqu'à ébullition dans l'extrémité inférieure du réacteur et condensation du méthanol dans l'extrémité supérieure du réacteur.

**7.** Procédé selon au moins l'une des revendications 1 à 5, **caractérisé en ce que** le traitement du catalyseur avec le méthanol (étape c)) est réalisée par rinçage avec du méthanol anhydre.

**8.** Procédé selon au moins l'une des revendications 1 à 7, **caractérisé en ce que** le traitement du catalyseur dans le réacteur avec le méthanol (étape c)) est réalisé au moins deux fois avec du méthanol fraîchement introduit.

**9.** Procédé selon au moins l'une des revendications 1 à 8, **caractérisé en ce que** le rapport volumique du méthanol au catalyseur lors du traitement du catalyseur dans le réacteur avec le méthanol (étape c)) se situe dans l'intervalle allant de 0,1:1 à 1:0,3.

**10.** Procédé selon au moins l'une des revendications 1 à 9, **caractérisé en ce que** après l'élimination du méthanol depuis le catalyseur (étape d)), le catalyseur est soumis à un post-séchage chimique.

**11.** Procédé de traitement d'un catalyseur pour la disproportionation d'hydrochlorosilanes, **caractérisé en ce que** le catalyseur est

a) lavé avec de l'eau très pure en une ou plusieurs étapes,
b) transféré à l'état humide dans le réacteur dans lequel la disproportionation doit se produire,
c) traité dans le réacteur avec du méthanol bouillant ou rincé avec du méthanol anhydre, et
d) le méthanol est éliminé du réacteur par évacuation et/ou par stripage avec un gaz inerte.